# NEUE EUROPÄISCHE PATENTSCHRIFT

(11) **EP 0 292 941 B2**
(45) Veröffentlichungstag und Bekanntmachung des Hinweises auf die Entscheidung über den Einspruch: **26.11.1997**
(45) Hinweis auf die Patenterteilung: 02.12.1992
(21) Anmeldenummer: 88108338.0
(22) Anmeldetag: 25.05.1988
(51) Int. Cl.: B09B 1/00

(54) **Anordnung zum Zurückhalten der Schadstoffe aus schadstoffhaltigen Deponie-Sickerwässern mit einer Dichtungsschicht aus mineralischen Materialien sowie Verfahren zum Herstellen dieser Dichtungsschicht**
Arrangement for retaining contaminants from contaminated landfill leachates with an inorganic sealing layer and method of manufacturing said layer
Agencement pour retenir les éléments nocifs des eaux d'infiltration polluées d'une décharge de déchets par une couche d'étanchéité minérale et procédé de fabrication de ladite couche

(30) Priorität: 27.05.1987 DE 3717884; 27.05.1987 DE 3717885
(43) Veröffentlichungstag der Anmeldung: 30.11.1988
(73) Patentinhaber: Dyckerhoff & Widmann Aktiengesellschaft, D-81902 München (DE)
(72) Erfinder:
(74) Vertreter: Patentanwälte Möll und Bitterich

(56) Entgegenhaltungen:
- WO-A-83/01204
- DE-A- 2 803 531
- DE-A- 2 838 363
- DE-A- 3 128 179
- DE-A- 3 505 076
- DE-A- 3 507 240
- US-A- 4 439 062
- PATENT ABSTRACTS OF JAPAN, Band 5, Nr. 31 (C-45)[703], 25. Februar 1981; & JP-A-55 155 775 (TADASHI NIIMI) 04-12-1980
- BAUMSCHINE + BAUTECHNIK, Band 32, Nr. 12, Dezember 1985, Seiten 467-470, ESSEN, DE; E. GLÄSER: "Abkapselung von Deponien"
- Fifth Canadian Geotechnical Colloquim: "Controll of contaminated migration by the use of liners", D.J. Folkes, 1982, S. 320-325

## Beschreibung

Die Erfindung betrifft eine Anordnung zum Zurückhalten der Schadstoffe aus schadstoffhaltigen Deponie-Sickerwässern mit mindestens einer Dichtungsschicht aus mineralischen Dichtungsmaterialien, insbesondere Tonmineralien, die Ausbildung einer Deponie sowie ein Verfahren zum Herstellen einer solchen Dichtungsschicht.

Bei Deponien, insbesondere Sondermüll-Deponien besteht die Forderung, daß die im Deponiekörper enthaltenen Schadstoffe nicht in die Biosphäre gelangen dürfen. Der Deponiekörper wird deshalb mit einer Deponieabdichtung versehen, die möglichst dicht sein, also möglichst keine Schadstoffe aus der Deponie austreten lassen soll. Technisch wird diese Aufgabe bislang durch Dichtungsschichten aus mineralischen Dichtungsmaterialien, meist Tonmineralien, gelöst, die eine vollständige Ummantelung des Deponiekörpers bilden, um nicht nur etwa im Deponiekörper enthaltene bzw. gebildete Sickerwässer zurückzuhalten, sondern auch das Eindringen von Niederschlägen in den Deponiekörper zu verhindern.

Dichtungsschichten aus mineralischen Dichtungsmaterialien können, technisch betrachtet, für kurze Zeiträume als dicht angesehen werden. In Anbetracht dessen, daß Abfälle in solchen Deponien aber auf Dauer, sozusagen für die Ewigkeit gelagert werden müssen, sind nicht kurze, sondern geologische, also sehr lange Zeiträume zu betrachten. In solchen Zeiträumen spielt auch die absolute Menge eines etwa durch Diffusion durch die Deponieabdichtung hindurch- und aus der Deponie austretenden Sickerwassers eine wesentliche Rolle. Die Verwendung von Kombinationsdichtungen aus mineralischen Dichtungsmaterialien und Dichtungsbahnen aus Kunststoffen bringt zwar für die erwähnten kurzen Zeiträume von vielleicht 30 bis 50 Jahren eine höhere Dichtigkeit; es wird dabei aber meist vergessen, daß nach dieser Zeit die aus organischen Stoffen bestehende Folie aufgrund von Stoffveränderungen ihre Dichtwirkung verliert.

Es ist zwar schon bekannt, bei einer Deponieabdichtung einer Dichtungsschicht eine aus einer Kunststoffbahn eine Adsorptionsschicht aus Aktivkohle zuzuordnen (DE 35 05 076 A1). Diese liegt - in Fließrichtung gesehen - vor der Kunststoffbahn, um organische Kohlenwasserstoffverbindungen, die durch die Kunststoffbahn hindurchdiffundieren könnten, vor dem Zutritt zu deren Oberfläche zurückzuhalten. Die Kunststoffbahn, wie auch die Adsorptionsschicht liegen zwar zwischen Tonschichten; diese dienen aber in erster Linie der Bettung der Kunststoffbahn und der Adsorptionsschicht und haben, wenn überhaupt, nur eine sehr geringe rückhaltende Wirkung. Durch den Rückstau des Sickerwassers oberhalb der Dichtungsschicht ist die Adsorptionsschicht dem Zustrom der Schadstoffe unmittelbar ausgesetzt und dadurch relativ schnell erschöpft. Die Dichtungsschicht selbst hat nur eine begrenzte Lebensdauer, da sie aus organischem Material besteht. Wenn sie versagt, können schadstoffbelastete Sickerwässer nahezu ungehindert in den Untergrund austreten.

Tonmineralien, wie sie üblicherweise für Dichtungsschichten verwendet werden, sind sehr empfindlich gegenüber bestimmten organischen Stoffen. So neigen z. B. Dichtungsschichten aus Bentonit zur Dehydrierung und nachfolgend zur Bildung von Rissen, wenn sie organischen Stoffen, wie z.B. Aceton, ausgesetzt werden. Deshalb ist es schon bekannt geworden, den Austritt von organischen Stoffen aus Deponien dadurch zu verhindern, daß diese Stoffe durch Organo-Ton adsorbiert werden (WO 83/01204).

Organo-Ton ist eine modifizierte Form bestimmter Tonmineralien, wie z. B. Smektit, Montmorillonit oder dergleichen, bei denen die austauschfähigen Kationen zwischen den Tonschichten gegen Organo-Ammoniumionen ausgetauscht sind, in denen ein oder mehrere Wasserstoffatome durch eine organische Gruppe ersetzt werden. Organo-Tone sind im wesentlichen feste Verbindungen, die eine anorganische und eine organische Phase aufweisen. Durch diese Substitution weisen Organo-Tone in organischen Flüssigkeiten einige der Merkmale auf, die unbehandelte Tone in Wasser zeigen. So quellen sie z. B. in organischen Flüssigkeiten auf und bilden stabile Gele und kolloidale Dispersionen.

Für die praktische Anwendung wurde in diesem Zusammenhang vorgeschlagen, entweder Organo-Ton unmittelbar einem flüssigen Deponiegut zuzumischen, eine Deponie im Sohlbereich mit Organo-Ton auszukleiden oder auch einer mit einer undurchlässigen Schicht ausgekleideten Deponie eine Filteranlage mit Organo-Ton nachzuordnen. Dabei wurde auch vorgeschlagen, oberhalb einer Schicht aus mit Organo-Ton gemischtem Bodenmaterial eine undurchlässige Schicht, also z. B. eine übliche Dichtungsschicht aus Kunststoff oder Tonmineralien anzuordnen. Dabei funktionieren sowohl die übliche undurchlässige Schicht, als auch die Schicht aus Boden und Organo-Ton völlig unabhängig voneinander, d.h., wenn die Dichtungsschicht undicht wird, gelangen Sickerwässer ungehindert in die darunterliegende Schicht aus Boden und Organo-Ton, die dann das gesamte gefährliche Abfallmaterial adsorbieren und deshalb entsprechend dick dimensioniert werden muß. Dazu kommt, daß die Organo-Ton enthaltende Schicht nur organische Schadstoffe adsorbieren kann, für alle anderen Schadstoffe aber durchlässig ist.

Vor diesem Hintergrund liegt der Erfindung die Aufgabe zugrunde, eine Anordnung zu schaffen, um das Austreten von schadstoffhaltigen Sickerwässern aus Deponien auch für geologische Zeiträume zu verhindern.

Nach der Erfindung wird diese Aufgabe durch die Merkmale des Patentanspruchs 1 gelöst.

Die Adsorptionsschicht kann aus zwei oder mehr Lagen bestehen. Dabei können die einzelnen Lagen Materialien mit unterschiedlichen Adsorptionseigenschaften enthalten. Es kann mindestens eine Lage vorgesehen sein, die Mikroorganismen zur Adsorption organischer Stoffe enthält.

Die einzelnen Schichten bzw. Lagen der Adsorptionsschicht können durch Zwischenschichten voneinander bzw. von den angrenzenden Schichten getrennt sein. Als Zwischenschichten können Schichten aus rolligem Material, wie Kies, Sand oder dergleichen, Schichten aus bindigem Material, wie Tonmineralien oder dergleichen, oder auch Filtermatten aus anorganischen Fasern, wie Mineralfasern oder dergleichen und/oder organischen Fasern, wie Kunstfasarn oder dergleichen vorgesehen sein.

Mineralische Dichtungsmaterialien bestehen aus Feststoff, nämlich aus den Bestandteilen des Bodens. Er weist aufgrund seines strukturellen Aufbaus Porenräume auf, die teils mit Gas (Porenluft), teils mit Flüssigkeit (Porenwasser) gefüllt sind. Zwischen diesen Phasen besteht unter den natürlichen äußeren Bedingungen eine scheinbare chemische Stabilität, die langfristig durch geologische Umwandlungsprozesse (Verwitterung) gestört wird. Bei der Verwendung von mineralischen Dichtungsmaterialien für eine Deponieabdichtung dringt vor allem auch unter der Wirkung des Staudrucks das Deponie-Sickerwasser ganz langsam in die Dichtungsschicht ein und verdrängt dort die Porenluft bzw. ersetzt das Porenwasser.

An der Grenze zwischen zwei Phasen, z.B. zwischen dem Deponiesickerwasser und der Oberfläche der Bodenteilchen, bildet sich dabei ein Übergangsgebiet (Phasengrenzgebiet) aus, das unter dem Einfluß der elektrostatischen Kräfte der Moleküle der Lösung und des festen Körpers steht. Je nach Art und Eigenschaften der festen Phase findet dabei eine Anreicherung von Inhaltsstoffen der flüssigen Phase an der Oberfläche des festen Körpers statt, die allgemein als Adsorption bezeichnet wird. Je nach Art der Bindung der gelösten Teilchen an den Molekülen des Festkörpers unterscheidet man zwischen der physikalischen und der chemischen Adsorption. Bei der physikalischen Adsorption werden Ionen oder Moleküle der Lösung hauptsächlich durch Van-der-Waals'sche Kräfte an den festen Körper gebunden; sie hat etwa den Charakter einer Benetzung oder Kondensation an der Oberfläche des festen Körpers. Im Gegensatz dazu erfolgt bei der chemischen Adsorption die Festlegung der in der Lösung dissoziierten Ionen durch mehr oder weniger polare Bindungen mit den Ionen des festen Körpers.

In der Erkenntnis, daß Deponie-Sickerwässer nicht vollständig, sondern nur die darin enthaltenen Schadstoffe zurückgehalten werden müssen, macht sich die Erfindung diese Vorgänge der physikalischen und chemischen Adsorption in der Weise zu nutze, daß bei einer derart langsamen Durchströmung einer Schicht aus mineralischen Dichtungsmaterialien, wie sie einem Sickerprozeß oder einer Diffusion entspricht, die im Sickerwasser enthaltenen Schadstoffe diesem durch Adsorption an dem festen Körper entzogen und so zurückgehalten werden. Je nach Art, Dicke und Zusammensetzung einer solchen Adsorptionsschicht können auf diese Weise grundsätzlich alle Arten von Schadstoffen zurückgehalten werden.

Der wesentliche Vorteil der Erfindung liegt deshalb darin, daß durch die Zuordnung einer solchen Adsorptionsschicht zu einer Dichtungsschicht aus mineralischen Dichtungsmaterialien, insbesondere Tonmineralien, diese als praktisch dicht gegen den Durchtritt von Schadstoffen betrachtet werden kann, und zwar ohne daß es der zusätzlichen Anordnung von z.B. Kunststoffolien bedarf. Dazu kommt noch, daß durch die in der Adsorptionsschicht ablaufenden Adsorptionsvorgänge die Durchlässigkeit des Gesamtsystems mit zunehmendem Alter verringert wird, die Dichtwirkung sich also mit der Zeit verbessert und nicht, wie bei den bekannten Kombinationsdichtungen, sich verschlechtert.

Die Bedeutung der der Adsorptionsschicht vorgeschalteten Dichtungsschicht liegt vor allem in der dadurch erreichbaren Einstellung der Durchströmung bzw. Durchsickerung sowohl hinsichtlich der Menge, wie auch hinsichtlich der Geschwindigkeit des schadstoffbelasteten Wassers.

Bei der Herstellung solcher Dichtungen insbesondere bei der Anlage von Deponien treten je nach Anwendungsart unterschiedliche Probleme auf. Bei horizontal verlaufenden Dichtungsschichten besteht das Problem, die Materialien mit einem richtigen Wassergehalt und in homogener Zusammensetzung mit entsprechenden Verdichtungsgeräten unter wechselnden Witterungsbedingungen mit einem vorgegebenen Durchlässigkeitsbeiwert einzubauen. Da die Randbedingungen gerade bei Witterungseinflüssen ungeschützt ausgesetzten Arbeiten sehr wechseln, kommt es immer wieder zu großen Qualitätsschwankungen.

Bei vertikalen Dichtungen, wie z.B. Dichtwänden, werden aus verarbeitungstechnischen Gründen Dichtmassen in flüssiger oder halbflüssiger Form verwendet, deren Feststoffanteil in der Größenordnung von 10 bis 15 % liegt; der überwiegende Teil dieser Massen besteht somit aus Wasser. Um überhaupt eine nennenswerte Festigkeit zu erreichen, ist der Zusatz hydraulischer Bindemittel, insbesondere Zement, erforderlich, was aber wieder den Nachteil hat, daß diese Massen mit der Zeit verspröden. Trotz des Zusatzes hydraulischer Bindemittel ist die Dauerbeständigkeit solcher Dichtwände allein aufgrund des hohen Wasseranteils von 90 bis 85 % umstritten.

Gegenstand der Erfindung ist deshalb noch ein Verfahren zum Herstellen einer Dichtungsschicht aus mineralischen Dichtungsmaterialien, insbesondere Tonmineralien, wie z.B. Bentonit, gegebenenfalls unter Zusatz von Mineralstoffen, mit dem es gelingt, Dichtungsmassen mit einem hohen Feststoffanteil zuverlässig und ohne Qualitätsmängel einbauen zu können. Dies erfolgt nach der Erfindung derart, daß die die Dichtungsschicht bildenden Materialien trocken vorgemischt und als trockenes Gemisch eingebaut werden und daß die für die Wirksamkeit des Gemisches als Dichtungsschicht erforderliche Feuchtigkeit nach dem Einbau zugeführt wird. Dieser Teil der Erfindung baut auf der Überlegung auf, daß die wesentlichen Probleme bei der Verarbeitung von mineralischen Dichtungsmaterialien von deren Feuchtigkeitsgehalt abhängen, der die Verarbeitbarkeit der Dichtmassen im jeweiligen Anwendungsfall sehr stark bestimmt. Vor allem bei Dichtwänden kann schon aus verarbeitungstechnischen Gründen der sehr hohe Wasseranteil der Mischung nicht gesenkt werden.

Der Erfindung liegt die überraschende Erkenntnis zugrunde, daß es möglich ist, auf das bislang bei der Verarbeitung für notwendig gehaltene Wasser ganz zu verzichten, die Mischung also trocken einzubauen und das für die Funktionsfähigkeit der Dichtungsschicht notwendige Wasser nachträglich zuzuführen und über Diffusion in der Schicht zu verteilen. Dies kann entweder aus der natürlichen Bodenfeuchtigkeit heraus erfolgen, beispielsweise über das Grundwasser, oder durch technische Maßnahmen, z.B. über in die Dichtungsschicht eingebaute Rohrleitungen zur Einleitung von Oberflächenwasser. Der Aufbau bzw. die Zusammensetzung der Dichtmassen kann auf diese Weise den jeweiligen Randbedingungen sehr leicht angepaßt werden.

Der Vorteil des trockenen Einbaus der Mischung ist zum einen darin zu sehen, daß bei leichter Verarbeitbarkeit der - trockenen - Mischung eine deutlich verbesserte Dauerbeständigkeit erreicht wird, die ebenso aus der höheren Dichte infolge größeren Feststoffanteils der Mischung folgt, wie eine Verringerung der Durchlässigkeit der jeweiligen Schicht. Die jeweilige Zusammensetzung beeinträchtigt die Einbaubarkeit der Mischung nicht; sie ist immer trocken.

Die Zugabe von hydraulischen Bindemitteln, wie z.B. Zement, ist aufgrund der erreichbaren hohen Dichte nicht notwendig, so daß, sofern gewünscht, auch eine gewisse Flexibilität der Dichtungsschicht vorgegeben werden kann, wie sie z.B. im Bergsenkungsgebiet oft erforderlich ist. Gleichwohl können im Einzelfall auch hydraulische Bindemittel beigegeben werden. Da die Ausgangsstoffe der Dichtungsmassen trocken vorgemischt werden, kann deren Zusammensetzung sehr gezielt erfolgen, etwa mit dem gleichen Qualitätsstandard wie eine Betonmischung.

Die Dichtmassen selbst sind filterstabil aufgebaut. Eventuell unbeabsichtigte Lockerzonen heilen durch den bei der Wasseraufnahme entstehenden Quelldruck selbst aus; diese Drücke können Größenordnungen von 20 bis 30 kN/qm erreichen.

Nach der Erfindung können sowohl horizontal, wie auch schräg oder vertikal verlaufende Dichtungsschichten ausgeführt werden. Horizontale Flächendichtungen können beispielsweise mit Fertigern hergestellt werden, wie sie im Straßenbau eingesetzt werden. Dabei sind die in Bearbeitung befindlichen Flächen vor Niederschlag zu schützen. Die Kontaktbereiche zum natürlichen Untergrund oder auch zu einem etwaigen Deponiekörper hin können mit Filterschichten, z.B. mit Filtervliesmatten abgedeckt werden.

Bei der Herstellung von vertikalen Dichtwänden muß die wasserfreie Dichtungsmasse in die Stützflüssigkeit eingebracht werden. Dies kann ähnlich wie bei einem Unterwasserbeton erfolgen, jedoch mit dem Unterschied, daß sich die eingebrachte Dichtmasse infolge ihrer inneren Reibung und bedingt durch den sich beim Kontakt mit der Stützflüssigkeit bildenden Filterkuchen wie ein Festkörper mit begrenzter Festigkeit verhält. Beim abschnittsweisen Einbringen der Dichtmasse in einzelnen Lamellen bleiben diese stabil, solange der Wanddruck in der jeweiligen Lamelle kleiner ist als der Flüssigkeitsdruck der Stützflüssigkeit. Diese Bedingung ist im allgemeinen dann erfüllt, wenn der Winkel der inneren Reibung der trockenen Dichtmasse größer ist als 15 Grad. Wenn der Winkel z.B. aufgrund eines hohen Tonmineralanteils unter 15 Grad absinken sollte, können unter einem bestimmten Winkel zur Vertikalen geneigte Lamellen hergestellt werden.

Es ist aber auch möglich, nach der klassischen Schlitzwandbauweise zu arbeiten, bei der einzelne Lamellen jeweils durch Schalungskörper, z.B. Rohre, abgeteilt werden. Hier hat das trockene Einbringen des Materials gegenüber einem Unterwasserbeton den Vorteil, daß das Schalungsrohr unmittelbar nach dem Einbringen des Materials gezogen werden kann, daß also kein Erhärten abgewartet werden muß.

Die Erfindung wird nachstehend anhand der Zeichnung näher erläutert. Es zeigt
- Fig. 1: einen Querschnitt durch den Sohlbereich einer nach der Erfindung ausgebildeten Deponieummantelung,
- Fig. 2: einen Querschnitt durch eine Hügeldeponie mit einer zumindest eine Dichtungsschicht aufweisenden Ummantelung,
- Fig. 3: einen Querschnitt durch eine nach dem Doppelmantelsystem ausgebildete Deponie und
- Fig. 4: die Arbeitsweise bei der Herstellung einer Dichtwand.

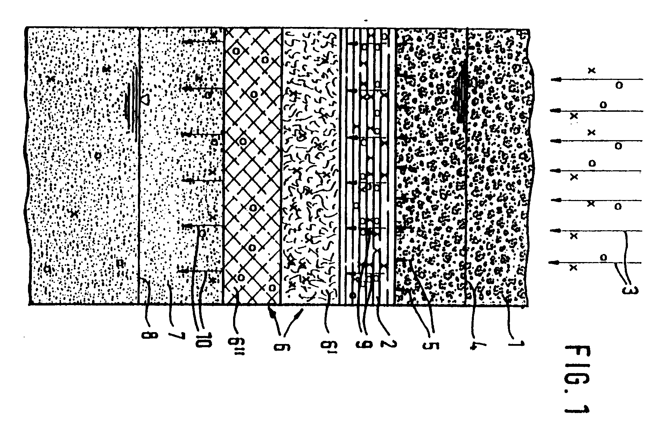

In dem Querschnitt der Fig. 1 ist schematisch der untere Bereich eines Deponiekörpers 1 angedeutet, der auf einer Dichtungsschicht 2 aus mineralischen Dichtungsmaterialien, z.B. einem Tonmineral, aufliegt. Oberhalb der Dichtungsschicht 2 hat sich, sei es durch im Deponiekörper gebildetes Wasser, sei es durch Niederschläge, die durch Pfeile 3 symbolisiert sind, ein Stauwasserspiegel 4 gebildet, der mit einem gewissen Staudruck (Pfeile 5) auf die Dichtungsschicht 2 wirkt. Die Niederschläge 3 können ihrerseits durch Schadstoffe belastet sein, was durch zwei verschiedene Symbole "x" und "o" anzudeuten versucht wurde; sie lösen aus dem Deponiekörper weitere Schadstoffe heraus.

Unterhalb der Dichtungsschicht 2 befindet sich eine Adsorptionsschicht 6. Diese Adsorptionsschicht 6 besteht im dargestellten Ausführungsbeispiel aus zwei Lagen, nämlich einer oberen Lage 6' und einer unteren Lage 6''. Unterhalb der Adsorptionsschicht 6 steht das normale Erdreich 7 an mit dem Grundwasserspiegel 8.

In Fig. 1 ist nun dargestellt, wie infolge des auf die Dichtungsschicht 2 wirkenden Staudrucks (Pfeile 5) stark schadstoffbelastetes Sickerwasser (Pfeile 9) langsam zunächst in die Dichtungsschicht 2 eindringt und durch diese hindurchsickert; Menge und Geschwindigkeit des Durchtritts können über die - eingestellte - Durchlässigkeit der Dichtungsschicht 2 reguliert werden. Das Sickerwasser dringt sodann in die obere Lage 6' der Adsorptionsschicht 6 ein, wo ein Teil ("x") der Schadstoffe zurückgehalten wird, und danach in die untere Lage 6'' der Adsorptionsschicht 6, in der weitere, gegebenenfalls andere Schadstoffanteile ("o") zurückgehalten werden. Das danach nur mehr geringe, unschädliche Konzentrationen an Schadstoffen aufweisende Sickerwasser (Pfeile 10) tritt unterhalb der Adsorptionsschicht 6 in den Boden aus und reichert das Grundwasser 8 an.

Art, Dicke und Anordnung der Dichtungsschicht 2 und der gegebenenfalls mehrlagigen Adsorptionsschicht 6 sind abhängig von den zu erwartenden Schadstoffarten und -mengen. Dabei ist die Anzahl der Lagen der Adsorptionsschicht 6, wenn in den einzelnen Lagen unterschiedliche Adsorbermaterialien eingesetzt werden sollen, abhängig von den zu erwartenden Schadstoffarten; die Dicke der Schichten ist Sache einer Abschätzung der für einen vorgegebenen Zeitraum anfallenden Schadstoffmengen. Dabei muß berücksichtigt werden, daß durch die An- bzw. Einlagerungen bei den Adsorptionsvorgängen die absolute Dichtigkeit der Schichten beträchtlich erhöht wird. Somit kann es bei dieser Art von Ummantelung nicht zu dem bekannten und gefürchteten Anstieg der Durchlässigkeit durch Ausspülungsvorgänge oder chemische Alterung kommen, wie z.B. bei Folie; eine enfindungsgemäß ausgebildete Dichtungsschicht wird vielmehr im Laufe der Zeit immer dichter.

Die Zusammensetzung der Adsorptionsschicht 6 bzw. der einzelnen Lagen 6' und 6'' dieser Schicht richtet sich nach der Art der anfallenden Schadstoffe. Als Grundmaterial werden im wesentlichen mineralische Dichtungsmaterialien, insbesondere Tonmineralien verwendet, denen die Adsorbermaterialien beigemischt werden. So kann zur Adsorption von Schwermetallen beispielsweise eine Schicht aus einem Gemisch aus einem Tonmineral, wie z.B. Bentonit, und Calciumhydroxyd verwendet werden. Zur Adsorption von organischen Substanzen können z.B. Mineralstoffgemische verwendet werden, denen bestimmte Mikroorganismen zugemischt werden, welche die Adsorption von organischen Stoffen, wie Öle, PCB (polychlorierte Biphenyle) und anderen Stoffen ermöglichen.

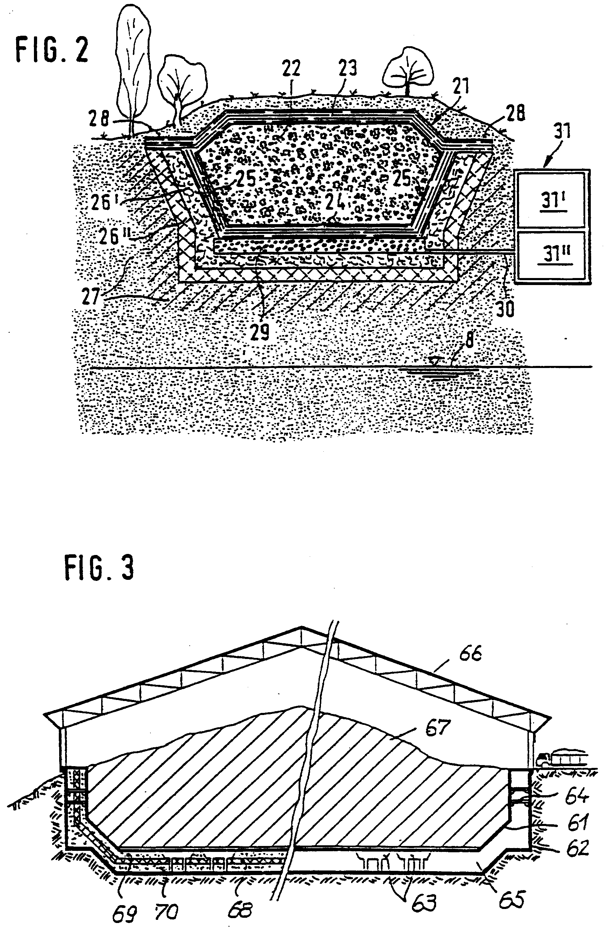

In Fig. 2 ist in einem Querschnitt durch eine Hügeldeponie der Aufbau ihrer Ummantelung aus einer Schichtenfolge nach der Erfindung dargestellt.

Bei dieser Deponie besteht die Ummantelung 21 zunächst aus einer, den Deponiekörper 22 vollständig einschließenden Dichtungsschicht 23 aus einem mineralischen Dichtungsmaterial, z.B. einem Tonmineral. Im Bereich der Sohle 24 und der Böschungen 25 folgen auf die Dichtungsschicht 23 eine erste Adsorptionsschicht 26' und eine zweite Adsorptionsschicht 26'', die auf das entsprechend aufbereitete anstehende Erdreich 27 aufgetragen sind. Die Adsorptionsschichten 26', 26'' sind in der vorstehend im Zusammenhang mit Fig. 1 beschriebenen Weise zusammengesetzt und aufgebaut. Die Dichtungsschicht 23 ist im oberen Bereich über die Oberkanten der Adsorptionsschichten 26', 26'' hinweggezogen (28), um auch diese abzudecken.

Eine weitere Möglichkeit der Erfindung ist in Fig. 2 dadurch angedeutet, daß sich im Bereich der Sohle 24 der Ummantelung 21 unterhalb der Dichtungsschicht 23 eine Drainschicht 29 befindet, die über eine Leitung 30 mit einer speziellen Adsorptionseinheit 31 verbunden ist. Diese Adsorptionseinheit 31 ist hier nur schematisch angedeutet; sie ist grundsätzlich in der gleichen Weise aus Dichtungsschichten und Adsorptionsschichten aufgebaut, wie beispielhaft im Zusammenhang mit Fig 1 beschrieben wurde. Sie ist seitlich und/oder leicht unterhalb der Deponie vorgesehen und kann aus mehreren Kammern bestehen, beispielsweise einer Kammer 31', in der schadstoffspezifische Adsorber, z.B. für Schwermetalle, untergebracht sein können und einer Kammer 31'' beispielsweise für eine biologische Reinigung des Sickerwassers.

Die externe Adsorptionseinheit 31 kann entweder schon im Anfangszustand wirksam sein, wenn aus dem Deponiekörper 22 selbst noch ein größerer Anfall von schadstoffhaltiger Flüssigkeit zu erwarten sein sollte; sie kann in einem Störfall wirksam werden, wenn zu einem späteren Zeitpunkt die Niederschläge, die an sich durch die Abdeckung aus der Dichtungsschicht 23 zurückgehalten werden sollen, einmal größer sein sollten als der mögliche Abfluß oder auch dann, wenn die in der Ummantelung 21 vorgesehenen Adsorptionsschichten 26', 26'' bereits durch Adsorption zugesetzt sein sollten. Bei einer in dieser Weise ausgebildeten Deponie können auch mehrere Adsorbereinheiten 31 vorgesehen sein; es können auch späterhin weitere Adsorbereinheiten ergänzt werden.

Neben solchen Hügeldeponien kennt man, vor allem als Langzeitdeponien, auch doppelwandige Behältersysteme. Einen Schnitt durch ein solches Behältersystem zeigt Fig. 3.

Der rechte Teil der Darstellung zeigt das System als Langzeitdeponie mit einem Innenmantel 61, z.B. aus Stahlbetonfertigbauteilen, und einem Außenmantel 62, der ebenfalls aus Stahlbeton besteht. Zwischen den beiden Mänteln 61 und 62 ist im Sohlbereich durch Stützelemente 63 und im Wandbereich durch Abstandhalter 64 ein Zwischenraum 65 gebildet, der während des Betriebs der Deponie als Kontroll- und Arbeitsraum dient. Hier kann die Deponie begangen und können beispielsweise einzelne Teile des Innenmantels 61 ausgewechselt werden, wenn sie schadhaft oder Fugen undicht geworden sein sollten. Ein Dach 66 schützt den Deponiekörper 67 vor Niederschlägen.

Nach der Erfindung ist es möglich, eine solche Langzeitdeponie in eine Enddeponie überzuführen; dies ist im linken Teil der Fig. 3 dargestellt. Je nach Breite bzw. Höhe des Zwischenraumes 65 wird dieser ganz oder teilweise mit einer Anordnung von, Dichtungs- und Adsorptionsschichten nach der Erfindung ausgefüllt. Im dargestellten Ausführungsbeispiel befindet sich eine solche Anordnung 68 zwischen einer inneren Schicht 69 und einer äußeren Schicht 70 aus einem inerten Material, z.B. Erdaushub, Bauschutt oder inertisierte Reststoffe aus Abfallbehandlungsanlagen, das tragfähig genug sein muß, um die Auflasten bei einem eventuellen Versagen des Innenbehälters 61 zu übernehmen. Die Dichtungs- und Adsorptionsschicht 68 nach der Erfindung garantiert die Sicherheit der Deponie auch für geologische Zeiträume, selbst wenn der Zwischenraum 65 erst dann in der beschriebenen Weise ausgefüllt werden sollte, wenn sich das Gefährdungspotential der im Deponiekörper 67 enthaltenden Stoffe im Laufe der Zeit schon weitgehend abgebaut haben sollte.

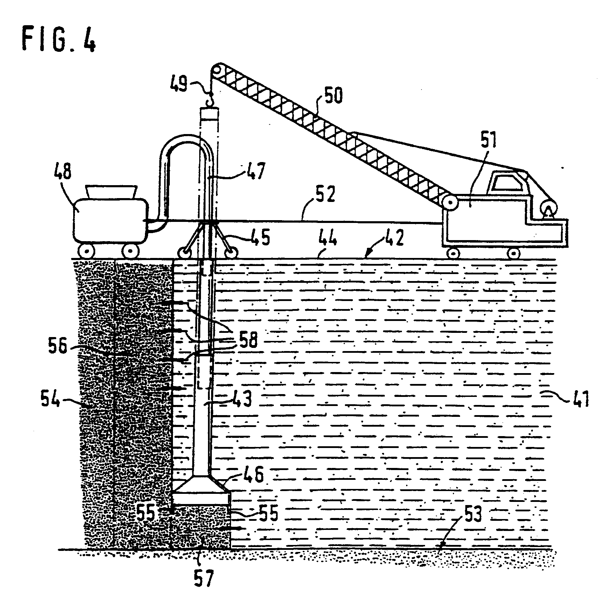

Anhand der Fig. 4 kann erläutert werden, wie in einem mit einer thixotropen Stützflüssigkeit 41, z.B. einer Bentonit-Suspension gefüllten Schlitz 42 eine vertikale Dichtwand hergestellt wird. Diesem Zweck dient eine Vorrichtung mit einem Teleskoprohr 43, das auf der Geländeoberfläche 44 an einem Führungswagen 45 abgestützt ist und an dessen unterem Ende sich ein trichterförmiges Gehäuse 46 befindet. In das Teleskoprohr 43 mündet ein Füllschlauch 47, der über eine fahrbare Pumpe 48 mit der trockenen Dichtmasse beschickt wird. Das Teleskoprohr 43 mit dem Gehäuse 46 ist mittels eines Hubseils 49 heb- und senkbar, das über einen Ausleger 50 zu einem Kran 51 führt. Der Kran 51 ist seinerseits über ein Zugseil 52 mit dem Führungswagen 45 und der Pumpe 48 verbunden, so daß mittels des Krans 51 nicht nur eine Vertikalbewegung des Teleskoprohrs 43 mit dem Gehäuse 46, sondern auch dessen Fortbewegung in horizontaler Richtung erfolgen kann.

Nach dem Absenken des Teleskoprohrs 43 mit dem Gehäuse 46 auf die Sohle 53 des Schlitzes 42 wird mittels der Pumpe 48 über den Füllschlauch 47 die trockene Dichtmasse in den Schlitz 42 eingebracht. Um sicherzustellen, daß die Innenwandungen des Teleskoprohrs 43 und des Gehäuses 46 beim Absenken in die thixotrope Flüssigkeit trocken bleiben, kann die untere Öffnung des Gehäuses 46 z.B. durch eine - nicht dargestellte - Klappe, einen Schieber oder dergleichen verschlossen sein. Nach Öffnen des Verschlusses kann die Dichtmasse austreten. Im Zuge des Einbringens der Dichtmasse 54 wird das Gehäuse 46 gehoben und das Teleskoprohr 43 entsprechend verkürzt; zugleich wird der dem Volumen der eingebrachten Dichtungsmasse entsprechende Teil der Stützflüssigkeit verdrängt. Eine Verdichtung der trockenen Dichtmasse erscheint nicht erforderlich. Ihre Dichte ist mit 1,8 bis 2,0 bedeutend größer als die der Stützflüssigkeit von etwa 1,08, so daß sich das trockene Pulver von selbst dicht lagert. Einer eventuellen Brückenbildung könnte durch den Einbau eines Schneckenförderers oder dergleichen begegnet werden.

Das Gehäuse 46 besitzt auf zwei einander gegenüberliegenden Seiten Schürzen 55, einerseits um eine Führung an der vorher hergestellten Lamelle 56 zu erreichen, andererseits um den oberen Bereich der jeweils herzustellenden Lamelle 57 sauber gegen die Stützflüssigkeit 41 abzutrennen.

Solange der Wanddruck in der jeweils zuletzt hergestellten Lamelle kleiner ist als der Flüssigkeitsdruck der Stützflüssigkeit, bleibt die Lamelle stabil; dies ist in der Zeichnung durch Pfeilpaare 58 angedeutet. Diese Bedingungen sind im allgemeinen dann erfüllt, wenn der Winkel der inneren Reibung des trockenen Gemisches größer ist als 15 Grad. Sollte der Winkel der inneren Reibung z.B. wegen eines sehr hohen Bentonitanteils unter 15 Grad absinken, sind vertikal verlaufende Lamellen nicht standfest; sie müssen dann mit einer bestimmten Neigung hergestellt werden, um die Standfestigkeit zu gewährleisten. In diesem Fall wird das Taleskoprohr 43 mit dem Gehäuse 46 entsprechend schräg geführt.

## Patentansprüche

1. Anordnung zum Zurückhalten vorbekannter Schadstoffe aus schadstoffhaltigen Deponie-Sickerwässern mit mindestens einer Dichtungsschicht (2) und mindestens einer Adsorptionsschicht (6), die - in Durchströmungsrichtung gesehen - hinter der Dichtungsschicht (2) angeordnet ist, wobei sowohl die Dichtungsschicht (2), als auch die Adsorptionsschicht (6) aus mineralischen Dichtungsmaterialien, insbesondere Tonmineralien, bestehen und die Adsorptionsschicht (6) in Form von Beimengungen Materialien enthält, die in der Lage sind, in dem aus der Deponie austretenden Sickerwasser enthaltene Schadstoffe durch physikalische und/oder chemische Adsorption zu binden und wobei über die Durchlässigkeit der der Adsorptionsschicht (6) vorgeschalteten Dichtungsschicht (2) der Schadstofftransport durch die Schichtenfolge im Sinne einer Durchsickerung oder Diffusion so eingestellt ist, daß je nach Art, Dicke und Zusammensetzung der Schichten die im Sickerwasser enthaltenen Schadstoffe diesem durch Adsorption bis auf geringe, unschädliche Konzentrationen entzogen und zurückgehalten werden.

2. Anordnung nach Anspruch 1, dadurch gekennzeichnet, daß die Adsorptionsschicht (6) aus zwei oder mehr Lagen (6', 6'') besteht.

3. Anordnung nach Anspruch 2, dadurch gekennzeichnet, daß die einzelnen Lagen (6', 6'') der Adsorptionsschicht (6) Materialien mit unterschiedlichen Adsorptionseigenschaften enthalten.

4. Anordnung nach Anspruch 2 oder 3, dadurch gekennzeichnet, daß mindestens eine Lage vorgesehen ist, die Mikroorganismen zur Adsorption organischer Stoffe enthält.

5. Anordnung nach einem der Ansprüche 1 bis 4, dadurch gekennzeichnet, daß die einzelnen Schichten (2, 6) bzw. Lagen (6', 6'') durch Zwischenschichten (11, 13) voneinander bzw. von den angrenzenden Schichten getrennt sind.

6. Anordnung nach Anspruch 5, dadurch gekennzeichnet, daß Zwischenschichten aus Schichten (11) aus rolligem Material, wie Kies, Sand oder dergleichen vorgesehen sind.

7. Anordnung nach Anspruch 5, dadurch gekennzeichnet, daß Zwischenschichten aus bindigem Material, wie Tonmineralien oder dergleichen vorgesehen sind.

8. Anordnung nach Anspruch 5, dadurch gekennzeichnet, daß Zwischenschichten aus Filtermatten (13) aus anorganischen Fasern, wie Mineralfasern oder dergleichen und/oder organischen Fasern, wie Kunstfasern oder dergleichen vorgesehen sind.

9. Deponie mit einem Deponiekörper und mit einer Ummantelung, die zumindest aus einer Dichtungsschicht aus mineralischen Dichtungsmaterialien, insbesondere Tonmineralien besteht, dadurch gekennzeichnet, daß die Ummantelung (21) zumindest im Sohl- und/oder Böschungsbereich gemäß den Ansprüchen 1 bis 8 ausgebildet ist.

10. Deponie mit einem Deponiekörper und mit einer Ummantelung, die zumindest aus einer Dichtungsschicht aus mineralischen Dichtungsmaterialien, insbesondere Tonmineralien besteht, dadurch gekennzeichnet, daß dem Deponiekörper gegebenenfalls unter Zwischenschaltung einer Drainschicht (29) mindestens eine gemäß den Ansprüchen 1 bis 8 ausgebildete Anlage als gesonderte Einheit (31) nachgeordnet ist.

11. Deponie, die als Langzeitdeponie zumindest im Sohl- und Wandbereich doppelwandig aus einem Innenbehälter als Umschließung für den Deponiekörper, einem Außenbehälter als Schutzbehälter und einem zwischen diesen als Kontroll- und Arbeitsraum belassenen Zwischenraum ausgebildet ist, dadurch gekennzeichnet, daß zur Überführung der Langzeitdeponie in eine Enddeponie in dem Zwischenraum eine Anordnung gemäß den Ansprüchen 1 bis 8 vorgesehen ist.

12. Deponie nach Anspruch 11 dadurch gekennzeichnet, daß die Anordnung nur einen Teil der Höhe bzw. Dicke des Zwischenraumes umfaßt und daß der übrige Teil mit einem tragfähigen inerten Material ausgefüllt ist.

13. Verfahren zum Herstellen einer flächigen Dichtungsschicht mit hohem Feststoffanteil aus einer dicht gelagerten Mischung aus mineralischen Dichtungsmaterialien, insbesondere Tonmineralien, wie z.B. Bentonit, gegebenenfalls unter Zusatz von Mineralstoffen nach einem der Ansprüche 1 bis 8, wobei die die Dichtungsschicht bildenden Materialien trocken vorgemischt und als trockenes Gemisch eingebaut werden und daß die für die Wirksamkeit des Gemisches als Dichtungsschicht erforderliche Feuchtigkeit nach dem Einbau zugeführt wird.

14. Verfahren nach Anspruch 13, dadurch gekennzeichnet, daß die Feuchtigkeit in Form der natürlich vorkommenden Bodenfeuchtigkeit. z.B. Grundwasser, zugeführt wird.

15. Verfahren nach Anspruch 13, dadurch gekennzeichnet, daß die Feuchtigkeit z.B. in Form von Oberflächenwasser durch technische Maßnahmen zugeführt wird.

16. Verfahren nach einem der Ansprüche 13 bis 15, dadurch gekennzeichnet, daß dem Gemisch hydraulische Bindemittel, wie z.B. Zement, zugegeben werden.

17. Verfahren nach einem der Ansprüche 13 bis 16, dadurch gekennzeichnet, daß zum Herstellen einer Dichtwand in einem durch eine Stützflüssigkeit stabilisierten Schlitz (42) im Boden das Gemisch (54) in sich jeweils über die gesamte Höhe der Wand erstreckenden Lamellen (56) von unten nach oben fortschreitend in den Schlitz eingebracht wird.

18. Verfahren nach Anspruch 17, dadurch gekennzeichnet, daß die Neigung der der Stützflüssigkeit zugekehrten und durch diese stabilisierten freien Stirnflächen der Lamellen zur Vertikalen in Abhängigkeit von dem Winkel der inneren Reibung des Gemisches gewählt wird.

## Claims

1. Arrangement for retaining known pollutants from polluted refuse site seepage water, with at least one sealing layer (2) and at least one adsorption layer (6) which - viewed in the flow direction - is arranged after the sealing layer (2), wherein both the sealing layer (2) and the adsorption layer (6) consist of mineral sealing materials, in particular clay minerals, and the adsorption layer (6) contains materials in the form of admixtures which are able to bind pollutants contained in the seepage water leaving the refuse site by physical and/or chemical adsorption, and wherein the transport of pollutants through the sequence of layers in the sense of a seepage or diffusion process is regulated by the permeability of the sealing layer (2) disposed before the adsorption layer (6) such that, according to the type, thickness and composition of the layers, the pollutants contained in the seepage water are removed from the latter by adsorption, until slight, harmless concentrations remain, and retained.

2. Arrangement according to claim 1, characterised in that the adsorption layer (6) consists of two or more strata (6', 6'').

3. Arrangement according to claim 2, characterised in that the individual strata (6', 6'') of the adsorption layer (6) contain materials with different adsorption properties.

4. Arrangement according to claim 2 or 3, characterized in that at least one stratum which contains microorganisms to adsorb organic matter is provided.

5. Arrangement according to one of claims 1 to 4, characterized in that the individual layers (2, 6) or strata (6', 6'') are separated from one another and the adjacent layers by intermediate layers (11, 13).

6. Arrangement according to claim 5, characterised in that intermediate layers consisting of layers (11) of a loose material, such as gravel, sand or the like, are provided.

7. Arrangement according to claim 5, characterised in that intermediate layers of a cohesive material, such as clay minerals or the like, are provided.

8. Arrangement according to claim 5, characterised in that intermediate layers of filter mats (13) of inorganic fibres, such as mineral fibres or the like, and/or organic fibres, such as synthetic fibres or the like, are provided.

9. Refuse site with a refuse site body and a casing, which consists of at least one sealing layer of mineral sealing materials, in particular clay minerals, characterised in that the casing (21) is formed according to claims 1 to 8, at least in the bottom and/or slope area.

10. Refuse site with a refuse site body and a casing, which consists of at least one sealing layer of mineral sealing materials, in particular clay minerals, characterised in that at least one system formed according to claims 1 to 8 is arranged after the refuse site body as a separate unit (31), possibly with a drainage layer (29) disposed in between.

11. Refuse site which is formed as a long-term refuse site in double-walled fashion, at least in the bottom and wall area, from an inner container as an enclosure for the refuse site body, an outer container as a protective container and an interspace which is left between these as an inspection and working space, characterised in that an arrangement according to claims 1 to 8 is provided in the interspace to convert the long-term refuse site into a final refuse site.

12. Refuse site according to claim 11, characterised in that the arrangement only covers a part of the height or thickness of the interspace, and that the remaining part is filled with an inert material capable of bearing a load.

13. Method for producing a plane sealing layer with a high solids content of a compact mixture of mineral sealing materials, in particular clay minerals such as bentonite, for example, possibly with the addition of mineral matter, according to one of claims 1 to 8, wherein the materials forming the sealing layer are premixed while dry and introduced as a dry mixture, and the moisture required to make the mixture effective as a sealing layer is supplied following the introduction of the mixture.

14. Method according to claim 13, characterised in that the moisture is supplied in the form of naturally occurring soil moisture, e.g. ground water.

15. Method according to claim 13, characterised in that the moisture, e.g. in the form of surface water, is supplied by technical measures.

16. Method according to one of claims 13 to 15, characterised in that hydraulic binding agents such as cement, for example, are added to the mixture.

17. Method according to one of claims 13 to 16, characterised in that, in order to produce a tight wall in a channel (42), which is stabilized by a support liquid, in the ground, the mixture (54) is introduced gradually into the channel from the bottom to the top in laminae (56), each of which extends over the entire height of the wall.

18. Method according to claim 17, characterised in that the inclination of the free end faces, which face the support liquid and are stabilized by the latter, of the laminae with respect to the vertical is selected in accordance with the angle of internal friction of the mixture.

## Revendications

1. Agencement pour retenir des éléments polluants connus des eaux d'infiltration polluées d'une décharge de déchets, à l'aide d'au moins une couche d'étanchéité (2) et au moins une couche d'adsorption (6) qui est disposée derrière la couche d'étanchéité -en observant dans la direction de l'écoulement- caractérisée en ce que aussi bien la couche d'étanchéité (2) que la couche d'adsorption (6) sont composées de matériaux d'étanchéité minéraux, en particulier de minéraux argileux, et la couche d'adsorption (6) contient sous forme d'additifs des matériaux en mesure de lier les éléments polluants contenus dans l'eau d'infiltration provenant de la décharge, par adsorption physique et/ou chimique, et en ce que, par l'intermédiaire de la perméabilité de la couche d'étanchéité (2) placée en amont de la couche d'adsorption (6), l'écoulement d'éléments polluants à travers la suite des couches, sous forme d'infiltration ou de diffusion, est ajusté de telle sorte que suivant le type, l'épaisseur et l'assemblage des couches, les éléments polluants contenus dans l'eau d'infiltration sont retirés et retenus par adsorption jusqu'à l'obtention de concentrations faibles et inoffensives.

2. Agencement selon la revendication 1, caractérisé en ce que la couche d'adsorption (6) est composée de deux couches (6', 6'') ou plus.

3. Agencement selon la revendication 2, caractérisé en ce que les différentes couches (6', 6'') de la couche d'adsorption (6) contiennent des matériaux présentant des propriétés d'adsorption différentes.

4. Agencement selon la revendication 2 ou 3, caractérisé en ce qu'et prévue au moins une couche contenant des micro-organismes pour l'adsorption des substances organiques.

5. Agencement selon l'une quelconque des revendications 1 à 4, caractérisé en ce que les différentes couches (2, 6) respectivement strates (6', 6'') sont séparées les unes des autres par des couches intermédiaires (12, 13), respectivement par les couches limitrophes.

6. Agencement selon la revendication 5, caractérisé en ce que sont prévues des couches intermédiaires composées de couches (11) en matériau non-cohérent, tel que le gravier, le sable ou analogue.

7. Agencement selon la revendication 5, caractérisé en ce que les couches intermédiaires sont prévues en matériau liant, tel que des minéraux argileux ou analogues.

8. Agencement selon la revendication 5, caractérisé en ce que les couches intermédiaires sont prévues en matelas filtrants (13) composés de fibres inorganiques, telles que des fibres minérales ou analogues et/ou de fibres organiques, telles que des fibres synthétiques ou analogues.

9. Décharge, avec un corps de décharge et avec une enveloppe, composée au moins d'une couche d'étanchéité en matériaux d'étanchéité minéraux, en particulier minéraux argileux, caractérisée en ce que l'enveloppe (21) est réalisée au moins dans la zone de soie et/ou de talus, suivant les revendications 1 à 8.

10. Décharge, avec un corps de décharge et avec une enveloppe, composée au moins d'une couche d'étanchéité en matériaux d'étanchéité minéraux, en particulier minéraux argileux, caractérisée en ce qu'est placée en aval du corps de décharge, le cas échéant avec interposition d'une couche de drain (29), au moins une installation réalisée suivant les revendications 1 à 8, à titre d'ensemble séparé (31).

11. Décharge, réalisée sous forme de décharge de stockage de longue durée, ayant une double paroi au moins dans la zone de sole et de paroi, en vue de composer un réservoir intérieur, à titre d'enceinte de confinement pour le corps de décharge, un réservoir extérieur, à titre de réservoir de protection, et un espace intermédiaire, que l'on laisse subsister entre les deux parois, à titre d'espace de contrôle et de travail, caractérisé en ce que, pour passer d'un stockage de longue durée à un stockage final, un agencement suivant les revendications 1 à 8 est prévu dans l'espace intermédiaire.

12. Décharge selon la revendication 11, caractérisée en ce que l'agencement ne fait qu'une partie de la hauteur, respectivement de l'épaisseur de l'espace intermédiaire et en ce que la partie restante est remplie avec un matériau inerte résistant à l'écrasement.

13. Procédé de fabrication d'une mince couche d'étanchéité ayant une forte proportion de solide d'un mélange étanche étalé composé de matériaux d'étanchéité minéraux, en particulier de matériaux argileux, tels que par exemple la bentonite, le cas échéant avec addition de substances minérales, suivant l'une des revendications 1 à 8, caractérisé en ce que les matériaux formant la couche d'étanchéité sont prémélangés à sec et mis sous forme d'une masse sèche et en ce que l'humidité nécessaire pour l'efficacité du mélange à titre d'étanchéité est ajoutée après la mise en place.

14. Procédé selon la revendication 13, caractérisé en ce que l'humidité est amenée sous forme d'humidité au sol, se dégageant naturellement, par exemple eau souterraine.

15. Procédé selon la revendication 13, caractérisé en ce que l'humidité est amenée par exemple sous forme d'eau de surface, grâce à des dispositions techniques.

16. Procédé selon l'une quelconque des revendications 13 à 15, caractérisé en ce qu'un liant hydraulique, tel que par exemple du ciment, est ajouté au mélange.

17. Procédé selon l'une quelconque des revendications 13 à 16, caractérisé en ce que, pour fabriquer une paroi d'étanchéité dans une tranchée (42) stabilisée par un liquide d'appui, on introduit dans le sol le mélange (54), dans des lamelles (56) qui s'étendent chacune sur toute la hauteur de la paroi, en progressant de bas en haut dans la tranchée.

18. Procédé selon la revendication 17, caractérisé en ce que l'inclinaison par rapport à la verticale des faces frontales libres des lamelles, tournées vers le liquide d'appui et stabilisées par ce dernier, est choisie en fonction de l'angle de frottement interne du mélange.
